# FASCICULE DE BREVET EUROPEEN

(11) **EP 4 579 973 B1**
(45) Date de publication et mention de la délivrance du brevet: **14.10.2026**
(21) Numéro de dépôt: 24221265.2
(22) Date de dépôt: 18.12.2024
(51) Int. Cl.: H02J 1/10, H02J 1/14, H02J 4/00

(54) **PROCÉDÉ DE RÉGULATION EN TENSION D'UNE BARRE OMNIBUS D'UN SYSTÈME ÉLECTRIQUE, SYSTÈME ET AÉRONEF CORRESPONDANTS**
VERFAHREN ZUR SPANNUNGSREGELUNG EINER STROMSCHIENE EINES ELEKTRISCHEN SYSTEMS, ENTSPRECHENDES SYSTEM UND LUFTFAHRZEUG
METHOD FOR VOLTAGE REGULATION OF A BUS BAR OF AN ELECTRICAL SYSTEM, CORRESPONDING SYSTEM AND AIRCRAFT

(30) Priorité: 21.12.2023 FR 2314929
(43) Date de publication de la demande: 02.07.2025
(73) Titulaire: SAFRAN, 75015 Paris (FR)
(72) Inventeur: BONHOMME, Damien Jacques Arthur, 77550 Moissy-Cramayel (FR); BIDAN, Guillaume François Daniel, 77550 Moissy-Cramayel (FR); ROUGIER, Florent Jean-Arnaud, 77550 Moissy-Cramayel (FR); LIENHARDT, Anne Marie, 77550 Moissy-Cramayel (FR)
(74) Mandataire: Cabinet Boettcher

(56) Documents cités:
- WO-A1-2014/103823
- CN-A- 108 069 036
- CN-A- 108 110 282
- JP-B2- 4 756 306

## Description

La présente invention concerne un procédé de régulation en tension d'une barre omnibus d'un système électrique d'un aéronef.

L'invention concerne également un système électrique mettant en œuvre un tel procédé ainsi qu'un aéronef équipé d'un tel système.

### ARRIERE PLAN DE L'INVENTION

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux actuellement en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des impacts environnementaux modérés dans un but d'amélioration de l'efficacité énergétique des avions.

Par voie de conséquence, la Déposante travaille en permanence à la réduction de son impact climatique par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

Un turbomachine d'aéronef comprend classiquement, d'amont en aval (selon un sens d'écoulement des gaz dans la turbomachine) : un compresseur basse pression, un compresseur haute pression, une chambre de combustion, une turbine haute pression, une turbine basse pression et une tuyère d'échappement des gaz. Le compresseur basse pression, le compresseur haute pression, la turbine haute pression, et la turbine basse pression comportent des rotors tournant dans des carters liés entre eux et avec la chambre de combustion et la tuyère pour former un assemblage tubulaire qui délimite un espace annulaire d'écoulement primaire des gaz. Le rotor de la turbine haute pression est lié en rotation au rotor du compresseur haute pression pour entraîner ce dernier en rotation et le rotor de la turbine basse pression est lié en rotation au rotor du compresseur basse pression pour entraîner ce dernier en rotation. L'ensemble comprenant la turbine haute pression et le compresseur haute pression est appelé système haute pression et l'ensemble comprenant la turbine basse pression et le compresseur basse pression est appelé système basse pression.

Avec l'intégration croissante d'éléments électriques au sein des aéronefs, il a été proposé d'associer aux turbomachines au moins une interface électrique entre la turbomachine et un ou plusieurs systèmes électriques de l'aéronef.

L'interface électrique est ainsi utilisée pour remplir une ou plusieurs fonctions comme par exemple aider la turbomachine au démarrage ou bien encore prélever une partie de la puissance générée par la turbomachine pour alimenter un ou des dispositifs de l'aéronef (la majorité de la puissance produite de la turbomachine étant bien entendu utilisée pour la propulsion de l'aéronef).

Usuellement, lesdits dispositifs sont raccordés à une barre omnibus qui est elle-même alimentée par une ou plusieurs sources d'alimentation électrique dont l'interface électrique. Les sources additionnelles peuvent être par exemple un organe de stockage, une batterie ou bien encore une pile à combustible.

Pour que la barre omnibus puisse fonctionner correctement, sa tension doit être régulée afin qu'elle demeure dans une plage de fonctionnement prédéfinie.

Or, lors d'un appel de puissance électrique particulièrement important de la part du ou des dispositif(s), il s'avère difficile de maintenir la tension de la barre omnibus dans ladite plage de fonctionnement prédéfinie.

Le document WO 2014/103823 A1 est un exemple d'art antérieur.

### OBJET DE L'INVENTION

L'invention a pour but d'obvier au moins en partie à l'inconvénient précité.

### RESUME DE L'INVENTION

A cet effet, l'invention propose un procédé de régulation en tension d'au moins une barre omnibus d'un système électrique, la barre étant alimentée par au moins une source, la source étant un système pile comprenant au moins une pile à combustible et un compresseur associé à la pile à combustible, la barre alimentant par ailleurs des charges dont au moins une charge dissipative, le procédé comprenant les étapes de :
- Au vu d'une grandeur caractéristique d'une intensité électrique générée par le système pile et d'une consigne d'une grandeur caractéristique d'une intensité électrique à générer par le système pile entrainant une augmentation de puissance à délivrer par le système pile, estimer si la pile à combustible peut atteindre la consigne dans un intervalle de temps qui est égal ou inférieur à un intervalle de temps prédéterminé,
- Si la pile à combustible ne peut atteindre la consigne dans un intervalle de temps qui est égal ou inférieur à un intervalle de temps prédéterminé, basculer le compresseur d'un mode nominal à un mode dopé s'il n'était pas déjà dans son mode dopé,
- Si le compresseur est basculé dans le mode dopé, commander une modification de l'alimentation électrique d'au moins l'une des charges, en commençant d'abord par ladite au moins une charge dissipative.

Grâce à l'invention, on étudie si la pile peut faire face seule ou pas à la demande de modification de la puissance électrique à délivrer.

L'invention propose de piloter temporairement l'alimentation électrique d'une ou plusieurs charges afin de charger ou de décharger le système électrique et notamment la barre omnibus. Ceci permet de maintenir de manière plus stable la tension de la barre omnibus dans sa plage de fonctionnement prédéterminée.

L'invention permet par exemple de réduire la durée nécessaire au système pile pour atteindre la consigne qui lui est imposée, en prélevant de la barre omnibus un delta de puissance électrique supplémentaire de manière à l'injecter au compresseur.

La priorisation des charges impactées par la modification de l'alimentation électrique permet de réguler de manière intelligente la tension aux bornes de la barre. En particulier, on évite ainsi un délestage brutal de l'ensemble des charges raccordées à la barre ou un effondrement de la tension d'alimentation du système électrique.

De préférence, la grandeur caractéristique d'une intensité électrique générée par le système pile est soit la puissance électrique délivrée par le système pile soit directement l'intensité électrique générée par le système pile.

De préférence, la consigne d'une grandeur caractéristique d'une intensité électrique à générer par le système pile est soit une consigne de puissance électrique à délivrer par le système pile soit une consigne d'intensité électrique à délivrer par le système pile.

De préférence, la modification de l'alimentation électrique d'au moins une des charges consiste en un arrêt temporaire de l'alimentation de ladite charge (délestage total) ou en une réduction ou une augmentation de l'alimentation électrique de ladite charge (délestage partiel) .

On utilise donc temporairement les charges comme actionneurs de régulation de la tension de la barre omnibus.

L'invention est ainsi le résultat de recherches technologiques visant à améliorer de manière très significative les performances des aéronefs et, en ce sens, contribue à la réduction de l'impact environnemental des avions.

Optionnellement, les charges alimentées par la barre comportent au moins une charge régénérative, et dans lequel on commande d'abord une modification de l'alimentation électrique de ladite au moins une charge dissipative avant de commander une modification de l'alimentation électrique de ladite au moins une charge régénérative.

Optionnellement, les charges dissipatives sont classées en au moins deux catégories de priorités différentes, les charges dissipatives appartenant à la première catégorie étant celles dont l'alimentation électrique est la première modifiée.

Optionnellement, la barre omnibus est une barre omnibus principale, les charges dissipatives appartenant à la première catégorie sont regroupées en au moins un groupe qui est connecté à une barre omnibus secondaire elle-même connectée à la barre omnibus principale (par l'intermédiaire d'un convertisseur électronique de puissance.

Optionnellement, le procédé comporte l'étape d'abaisser une tension aux bornes de la barre omnibus secondaire pour modifier l'alimentation électrique fournie au groupe par la barre omnibus principale.

Optionnellement, le procédé comprend également les étapes de :
- Au vu d'une grandeur caractéristique d'une intensité électrique générée par le système pile et d'une consigne d'une grandeur caractéristique d'une intensité électrique à générer par le système pile entrainant une diminution de puissance à délivrer par le système pile, estimer si la pile à combustible peut atteindre la consigne dans un intervalle de temps qui est égal ou inférieur à un intervalle de temps prédéterminé,
- Si la pile à combustible ne peut atteindre la consigne dans un intervalle de temps qui est égal ou inférieur à un intervalle de temps prédéterminé, commander une modification de l'alimentation électrique d'au moins l'une des charges, en commençant d'abord par la ou les charges dissipatives.

Optionnellement, si l'intervalle de temps est supérieur à l'intervalle de temps prédéterminé, on s'appuie sur au moins une autre source pour alimenter la barre omnibus.

Optionnellement, dans lequel est mis en œuvre par l'intermédiaire d'au moins un organe de stockage d'énergie servant de source additionnellement à la barre omnibus.

L'invention concerne également un système électrique mettant en œuvre le procédé tel que précité.

L'invention concerne également un aéronef comprenant au moins le système électrique tel que précité.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit, laquelle est illustrative et non limitative, et doit être lue en regard des dessins annexés, parmi lesquels :
[Fig. 1] la figure 1 est une vue schématique d'un système selon un mode de réalisation particulier de l'invention permettant de mettre en œuvre un procédé de régulation en tension d'une barre omnibus d'un système électrique d'un aéronef ;
[Fig. 2a] la figure 2a est un schéma illustrant les échanges entre le système pile et un contrôleur général du système représenté à la figure 1 selon une première configuration ;
[Fig. 2b] la figure 2b est un schéma illustrant des basculements de modes de fonctionnement d'un compresseur du système pile représenté à la figure 2a ;
[Fig. 3a] la figure 3a est un schéma illustrant les échanges entre le système pile et un contrôleur général du système représenté à la figure 1 selon une deuxième configuration ;
[Fig. 3b] la figure 3b est un organigramme schématisant différentes étapes de préparation du compresseur à une augmentation future d'une puissance électrique à générer par le système pile représenté à la figure 3a.

### DESCRIPTION DETAILLEE DE L'INVENTION

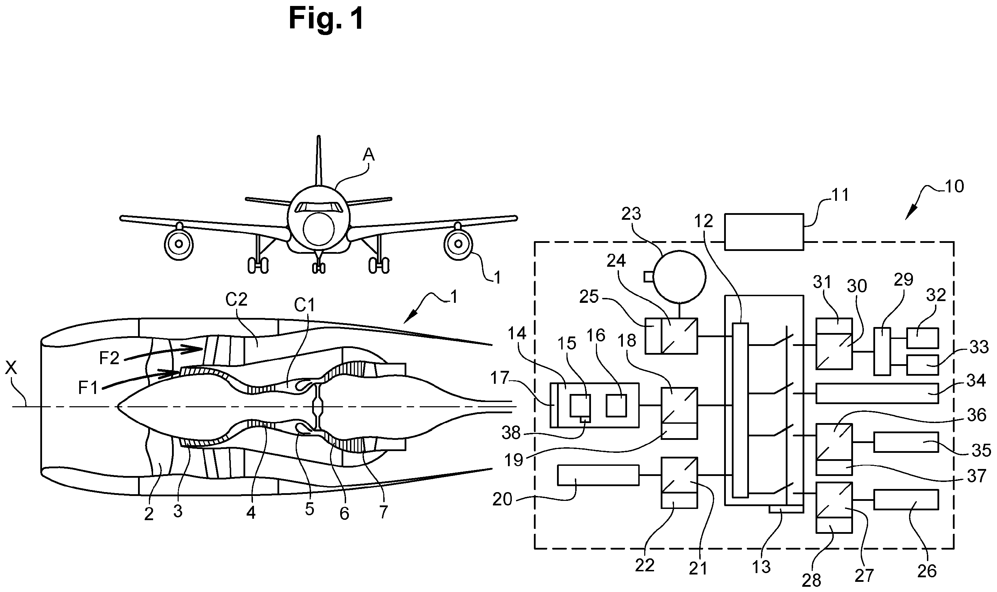

En référence à la figure 1, un système électrique 10 selon un mode de réalisation particulier de l'invention, est ici décrit en application à une turbomachine 1 à double flux d'un aéronef A.

La turbomachine 1 comporte, d'amont en aval selon un sens d'écoulement des gaz dans ladite turbomachine 1 : une soufflante 2, un compresseur basse pression 3, un compresseur haute pression 4, une chambre de combustion 5, une turbine haute pression 6 et une turbine basse pression 7. Le compresseur basse pression 3, le compresseur haute pression 4, la turbine haute pression 6 et la turbine basse pression 7 comportent chacun un rotor mobile en rotation dans un carter.

Le rotor de la turbine haute pression 6 et le rotor de la turbine basse pression 7 sont respectivement solidaires en rotation du rotor du compresseur haute pression 4 et du rotor du compresseur basse pression 3, de sorte que le rotor de ladite turbine haute pression 6 et le rotor de ladite turbine basse pression 7 entraînent respectivement le rotor dudit compresseur haute pression 4 et le rotor dudit compresseur basse pression 3 en rotation autour d'un axe X longitudinal de la turbomachine 1 sous l'effet de la poussée des gaz provenant de la chambre de combustion 5.

La masse d'air aspirée par la soufflante 2 est divisée en deux flux : un flux primaire F1 qui circule dans un canal annulaire d'écoulement primaire C1, et un flux secondaire F2 qui est concentrique avec le flux primaire F1 et qui circule dans un canal annulaire d'écoulement secondaire C2.

L'ensemble comprenant la turbine basse pression 7 et le compresseur basse pression 3 est également connu sous le terme de « système haute pression » et l'ensemble comprenant la turbine haute pression 6 et le compresseur haute pression 4 est également connu sous le terme de « système basse pression ».

L'agencement général de la turbomachine 1 décrit est classique et ne sera pas plus détaillé ici.

Le système électrique 10 comporte au moins un contrôleur général 11 associé à la turbomachine 1.

Le système de gestion 10 comporte également une barre omnibus 12 et par exemple une barre omnibus 12 de courant continu. La barre omnibus 12 comporte ici son propre contrôleur 13 qui est par ailleurs en communication avec le contrôleur général 11.

La barre omnibus 12 est alimentée par au moins une première source.

La première source est un système pile 14 comprenant au moins une pile à combustible 15 et au moins un compresseur 16 associé à la pile à combustible 15. Le système pile 14 comporte également un contrôleur du système pile 14 appelé par la suite « contrôleur pile 17 ». Le contrôleur pile 17 est configuré pour échanger un ou des données avec le contrôleur général 11.

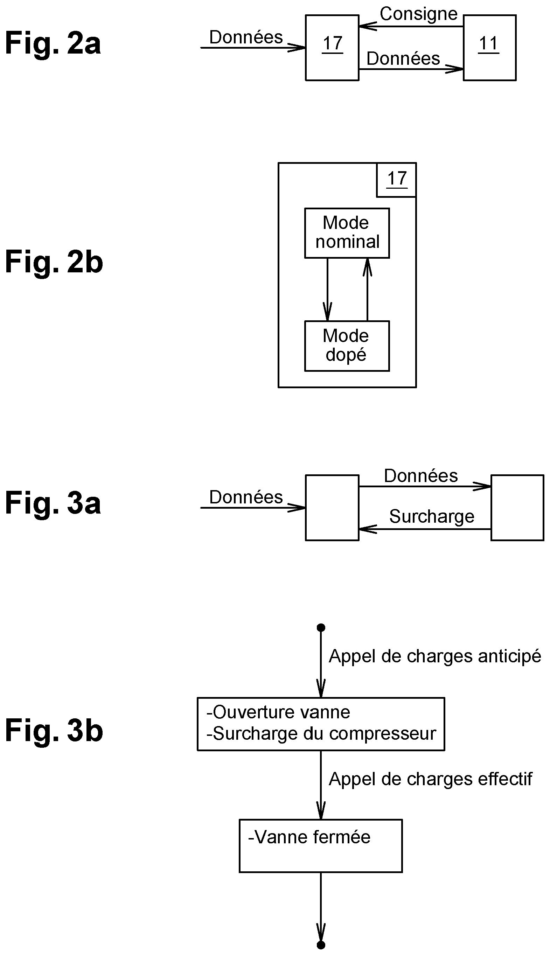

De manière connue en soi, le compresseur 16 peut fonctionner selon au moins deux modes, un mode nominal et un mode dopé. Lorsqu'il est dans son mode dopé (qui est un mode temporaire, le compresseur 16 travaillant normalement en mode nominal), le compresseur 16 accroit le débit d'air qu'il compresse ce qui lui permet d'alimenter davantage la pile à combustible 15. Le contrôleur pile 17 pilote en conséquence le débit d'hydrogène transmis à la pile à combustible 15 ce qui permet à celle-ci d'augmenter temporairement la puissance électrique qu'elle délivre à la barre omnibus 12. Dans son mode dopé, le compresseur 16 présente une puissance de compression qui est comprise entre par exemple 125 à 150% de la puissance de compression du compresseur 16 lorsque le compresseur 16 est dans son mode nominal. Par ailleurs, en référence à la figure 2a, le contrôleur général 11 transmet au contrôleur pile 17 une consigne d'une puissance électrique à délivrer à la barre omnibus 12. Le contrôleur pile 17 peut transmettre au contrôleur général 11 une ou des données indiquant par exemple quelle puissance électrique maximale le système pile 17 peut délivrer, si le compresseur 16 est en mode nominal, ou en mode dopé ...

Le contrôleur pile 17 reçoit également du système pile 14 une ou des données comme par exemple une ou des données de la liste suivante : état de fonctionnement de la pile à combustible 15, point de fonctionnement de la pile à combustible 15, pression dans la pile à combustible 15, température dans la pile à combustible 15, tension aux bornes de la pile à combustible 15 ...

Le système pile 14 est connecté à la barre omnibus 12 soit directement, soit indirectement par l'intermédiaire d'au moins un composant électrique et/ou électronique additionnel comme par exemple un convertisseur électronique de puissance 18. Ledit convertisseur électronique de puissance 18 est par exemple un convertisseur courant continu/courant continu.

Ledit convertisseur électronique de puissance 18 comporte ici son propre contrôleur 19 qui est en communication avec le contrôleur pile 17 et/ou le contrôleur général 11.

De préférence, la barre omnibus 12 est alimentée par au moins une deuxième source se présentant sous la forme d'un organe de stockage 20.

L'organe de stockage 20 est par exemple une batterie.

L'organe de stockage 20 est raccordé à la barre omnibus 12 soit directement, soit indirectement par l'intermédiaire d'au moins un composant électrique et/ou électronique comme par exemple un convertisseur électronique de puissance 21. Ledit convertisseur électronique de puissance 21 est par exemple un convertisseur courant continu/courant continu.

Ledit convertisseur électronique de puissance 21 comporte ici son propre contrôleur 22 qui est en communication avec le contrôleur général 11.

Ledit convertisseur électronique de puissance 21 est de préférence réversible afin que l'organe de stockage 20 puisse être rechargé par l'intermédiaire de la barre omnibus 12.

L'organe de stockage 20 est raccordé à la barre omnibus 12 par un canal (tel qu'un canal à courant continu) connecté en parallèle du canal raccordant le système pile 14 à la barre omnibus 12.

Optionnellement, la barre omnibus 12 est alimentée par au moins une troisième source. La troisième source est par exemple une machine électrique 23 et par exemple une machine synchrone à aimants permanents.

Ladite machine électrique 23 est par exemple reliée au système basse pression de la turbomachine 1 et/ou haute pression de la turbomachine 1. Par exemple la machine électrique 23 est reliée à la turbomachine 1 pour prélever, au niveau du système basse pression et/ou du système haute pression, une partie d'une puissance générée par la turbomachine 1.

La machine électrique 23 est raccordée à la barre omnibus 12 soit directement, soit indirectement par l'intermédiaire d'au moins un composant électrique et/ou électronique comme par exemple un convertisseur électronique de puissance 24. Ledit convertisseur électronique de puissance 24 est par exemple un convertisseur courant alternatif/courant continu.

Ledit convertisseur électronique de puissance 24 est de préférence réversible.

Ledit convertisseur électronique de puissance 24 comporte ici son propre contrôleur 25 qui est en communication avec le contrôleur général 11.

La machine électrique 23 est raccordée à la barre omnibus 12 par un canal (tel qu'un canal à courant continu) connecté en parallèle du canal raccordant le système pile 14 à la barre omnibus 12 et/ou du canal raccordant l'organe de stockage 20 à la barre omnibus 12.

Optionnellement, la barre omnibus 12 est alimentée par au moins une quatrième source (non représentée ici). Ladite quatrième source est une source d'alimentation électrique externe. De préférence cette connexion est assurée en parallèle d'un ou de plusieurs canaux reliant une ou plusieurs autres sources à la barre omnibus 12.

Par ailleurs, la barre omnibus 12 permet d'alimenter un ou des dispositifs de l'aéronef 1 appelés par la suite « charges ».

Dans les faits, les charges connectées à la barre omnibus 12 sont classées en plusieurs catégories. Ce classement est par exemple indiqué manuellement au contrôleur général 11 qui l'enregistre.

Les charges sont réparties de préférence en au moins deux catégories : les charges dissipatives et les charges régénératrices.

Les charges régénératrices ont la capacité de pouvoir restituer de manière ponctuelle de la puissance électrique à la barre omnibus 12 afin de devenir temporairement une source. Les charges régénératrices sont de type ventilateur, pompe (pompe carburant, pompe à huile), ... Typiquement ces charges régénératrices sont des charges tournantes. En effet, elles comprennent un élément mobile en rotation qui peut permettre de renvoyer à la barre omnibus 12 de la puissance électrique par conversion du mouvement mécanique de l'élément mobile en énergie électrique.

Une charge régénératrice peut être :
- raccordée directement à la barre omnibus 12 (optionnellement par l'intermédiaire additionnel d'un contacteur) ;
- raccordée indirectement à la barre omnibus 12 par l'intermédiaire d'un composant électrique et/ou électronique comme par exemple un convertisseur électronique de puissance, un contacteur pouvant potentiellement assurer la liaison entre la barre omnibus 12 et le composant électrique et/ou électronique ;
- raccordée indirectement à la barre omnibus 12 par l'intermédiaire de plusieurs composants électriques et/ou électroniques comme par exemple un convertisseur de puissance auquel est raccordée une barre omnibus additionnelle et à laquelle est raccordée elle-même la charge, un contacteur pouvant potentiellement assurer la liaison entre la barre omnibus 12 et l'un des composants électrique et/ou électronique.

De manière non limitative, dans le cas présent, une seule charge régénératrice 26 est raccordée à la barre omnibus 12.

Dans le cas présent, et de manière non limitative, la charge régénératrice 26 est raccordée à la barre omnibus 12 par l'intermédiaire d'un convertisseur électronique de puissance 27. Ledit convertisseur électronique de puissance 27 est par exemple un convertisseur courant continu/courant continu.

Ledit convertisseur électronique de puissance 27 comporte ici son propre contrôleur 28 qui est en communication avec le contrôleur général 11.

Les charges dissipatives, contrairement aux charges régénératrices, n'ont pas la capacité de restituer de l'énergie à la barre omnibus 12. Elles absorbent simplement l'énergie électrique et la convertissent, en cas surplus, en chaleur ou en d'autres formes d'énergie.

On distingue plusieurs types de charges dissipatives.

Les charges dissipatives de type 1 (par exemple un convertisseur d'abaissement de tension) sont les charges raccordées indirectement à la barre omnibus 12 par l'intermédiaire de plusieurs composants électriques et/ou électroniques (et optionnellement par l'intermédiaire additionnel d'un contacteur) comme par exemple un convertisseur de puissance auquel est raccordée une barre omnibus secondaire et à laquelle est raccordée elle-même la charge.

De manière non limitative, dans le cas présent, les charges dissipatives de type 1 sont raccordées à une barre omnibus additionnelle 29 qui est elle-même raccordée à la barre omnibus 12 par l'intermédiaire d'un convertisseur électronique de puissance 30. Ledit convertisseur électronique de puissance 30 est par exemple un convertisseur courant continu/courant continu. Ledit convertisseur électronique de puissance 30 est par exemple configuré pour permettre d'alimenter des charges de plus faibles puissances que celles raccordées par exemple directement à la barre omnibus 12. Ledit convertisseur électronique de puissance 30 est par exemple configuré pour permettre une conversion d'une tension 800 Volts (courant continu) vers une tension 540 Volts (courant continu) ou 270 Volts (courant continu).

Ledit convertisseur électronique de puissance 30 comporte ici son propre contrôleur 31 qui est en communication avec le contrôleur général 11.

Par exemple deux charges dissipatives 32, 33 de type 1 sont raccordées à la barre omnibus additionnelle 29.

Les charges dissipatives de type 2 sont les charges raccordées directement à la barre omnibus 12 (optionnellement via un contacteur).

De manière non limitative, dans le cas présent une seule charge dissipative 34 de type 2 est raccordée à la barre omnibus 12.

Les charges dissipatives de type 3 sont les charges raccordées indirectement à la barre omnibus 12 par l'intermédiaire d'un unique composant électrique et/ou électronique comme par exemple un convertisseur électronique de puissance (et optionnellement par l'intermédiaire additionnel d'un contacteur). Les charges dissipatives de type 3 sont par exemples des dispositifs de dégivrage (d'une nacelle de l'aéronef, d'un tambour - spinner - de l'aéronef, ...) ou des dispositifs de protection antigivrage des ailes de l'aéronef par exemple.

De manière non limitative, dans le cas présent une seule charge dissipative 35 de type 3 est raccordée à la barre.

Dans le cas présent, et de manière non limitative, la charge dissipative 35 est raccordée à la barre par l'intermédiaire d'un convertisseur électronique de puissance 36. Ledit convertisseur électronique de puissance 36 est par exemple un convertisseur courant continu/courant continu.

Le convertisseur électronique de puissance 36 comporte ici son propre contrôleur 37 qui est en communication avec le contrôleur général 11.

Préférentiellement, les charges dissipatives sont elles-mêmes classées en au moins deux catégories de priorités différentes.

On a donc ici trois catégories de charges : les charges dissipatives de priorité 1, les charges dissipatives de priorité 2 et les charges régénératrices.

Les charges dissipatives de priorité 1 englobent de préférence les charges de type 1 (soit ici les charges 32 et 33). Les charges dissipatives de priorité 2 englobent de préférence les charges de type 2 et les charges de type 3 (soit ici les charges 34, 35).

En service, la barre omnibus 12 permet d'alimenter les différentes charges grâce à son alimentation par les différentes sources.

Pour que le système électrique 10, et en particulier la barre omnibus 12, puisse fonctionner de manière optimale (notamment en terme de stabilité), la puissance électrique générée par les sources doit être sensiblement égale à la puissance électrique consommée par les charges à tout instant. En effet, si la puissance électrique générée est inférieure à la puissance électrique consommée par les charges, la tension aux bornes de la barre omnibus 12 diminue et si la puissance électrique générée est supérieure à la puissance électrique consommée par les charges la tension aux bornes de la barre omnibus 12 augmente. Or la tension de la barre omnibus 12 doit rester dans une plage de fonctionnement prédéfinie.

Dès lors, le système électrique 10 est configuré pour mettre en œuvre un procédé de régulation en tension de la barre omnibus 12 afin conserver ladite tension dans la plage de fonctionnement prédéfinie et de limiter les fluctuations de ladite tension.

A cet effet, le système électrique 10 s'appuie de préférence sur le système pile 14 pour réguler en tension la barre omnibus 12. En particulier, le système électrique 10 va profiter du fait que le système pile 14 peut ponctuellement délivrer une puissance électrique accrue grâce au compresseur 16 et son mode dopé.

Ainsi, au cours d'une première étape, le contrôleur général 11 estime la puissance électrique devant être délivrée aux charges par la barre omnibus 12 et la puissance électrique fournie par les différentes sources à la barre omnibus 12. En cas d'augmentation de la puissance électrique consommée par les charges, le contrôleur général 11 transmet de préférence au système pile 14 une consigne d'une puissance électrique à atteindre pour compenser cette demande des charges.

Au cours d'une deuxième étape, comme symbolisé par la figure 2b, le contrôleur pile 17 connaissant la puissance électrique déjà générée par la pile à combustible 15 et recevant la consigne de puissance électrique de la part du contrôleur général 11, estime si la pile à combustible 15 seule peut atteindre la consigne dans un intervalle de temps qui est égal ou inférieur à un intervalle de temps prédéterminé, par exemple entre quelques millisecondes et une dizaine de millisecondes.

Au cours d'une troisième étape, si le contrôleur pile 17 estime que la pile à combustible 15 ne peut atteindre seule la consigne de puissance dans l'intervalle de temps prédéterminé, le contrôleur pile 17 bascule le compresseur 16 de son mode nominal à son mode dopé. Le contrôleur pile 17 informe le contrôleur général 11 de ce basculement. Le compresseur 16 augmente sa puissance de compression par l'intermédiaire de son alimentation électrique par le système électrique 10.

Parallèlement, le contrôleur pile 17 transmet au compresseur 16 une consigne d'augmentation d'au moins une donnée caractéristique du flux d'air transmis par le compresseur 16 à la pile à combustible 15 (consigne de rendement, de débit massique d'air en entrée du compresseur 16, consigne de débit massique d'air en sortie de compresseur 16 ...). Cette consigne est estimée à partir d'au moins une information liée à l'état du système pile 14 (comme le point de fonctionnement de la pile à combustible 15) et de la consigne de puissance électrique transmise par le contrôleur général 11. Cette consigne peut évoluer dans le temps et par exemple s'abaisser au fur et à mesure que la pile à combustible 15 atteint sa consigne de puissance électrique transmise par le contrôleur général 11.

Au cours de la quatrième étape, étant donné que la pile à combustible 15 a recours au mode dopé du compresseur 16, le contrôleur général 11 :
- estime si une ou plusieurs des autres sources alimentant la barre omnibus 12 peut soutenir le système pile 14 à augmenter la puissance électrique alimentant la barre omnibus 12, et/ou
- ordonne une modification de l'alimentation électrique par la barre omnibus 12 d'au moins l'une des charges.

En effet, une ou plusieurs sources peut être saturées et/ou défaillantes et/ou limitées et/ou on peut ne pas vouloir solliciter à répétition une autre des sources d'alimentation de la barre omnibus 12. Dans ce cas, pour soutenir le système pile 14, le contrôleur général 11 ordonne une modification de l'alimentation électrique par la barre omnibus 12 **d'au** moins l'une des charges et en particulier ordonne d'abord une modification de l'alimentation électrique d'au moins une des charges dissipatives.

De préférence, le contrôleur général 11 ordonne d'abord une modification de l'alimentation électrique d'au moins une des charges dissipatives de priorité 1.

En particulier, le contrôleur général 11 ordonne un abaissement de l'alimentation électrique d'au moins une des charges dissipatives de priorité 1. Ici, le contrôleur général 11 ordonne un abaissement de l'alimentation électrique de la barre additionnelle 29 tout en veillant bien entendu à ce que la tension aux bornes de la barre additionnelle 29 demeure elle-même dans une plage de fonctionnement prédéfinie selon les standards fournis par les données constructeurs du système électrique 10. A cet effet, le contrôleur général 11 transmet une consigne correspondante au contrôleur 31 pour que celui-ci abaisse la puissance électrique transmise à la barre additionnelle.

Ainsi on régule la tension aux bornes de la barre omnibus 12 sans délester de manière totale des charges.

Si la modification de l'alimentation électrique de toutes les charges dissipatives de priorité 1 ne suffit pas pour soutenir le système pile 14, le contrôleur général 11 ordonne une modification de l'alimentation électrique d'au moins une des charges dissipatives de priorité 2.

En particulier, le contrôleur général 11 ordonne une coupure ou un abaissement de l'alimentation électrique d'au moins une des charges dissipatives de priorité 2.

A cet effet, le contrôleur général 11 transmet une consigne correspondante au contrôleur 37 pour que celui-ci abaisse la puissance électrique transmise à la charge 35 et/ou bien commande l'un des contacteurs pour couper temporairement l'alimentation de l'une des charges 34 et/ou 35.

On note que les charges dissipatives de priorité 2 ont un temps de réponse (à une modification de leur alimentation électrique) relativement lent vis-à-vis d'un temps de réponse du système électrique 10 pour faire face à la demande d'augmentation de puissance électrique à fournir à la barre omnibus 12. En effet, les charges dissipatives de priorité 2 sont régulées en pression, en température, en débit ... et leurs constantes de temps en régulation est plus lente que la constante de temps en régulation en tension de la barre omnibus 12.

En conséquence, une interruption temporaire de leur alimentation ou un abaissement temporaire de leur alimentation (le temps pour le système électrique 10 de répondre à la demande d'augmentation de puissance électrique à fournir à la barre omnibus 12 et par exemple le temps pour le système pile 14 d'atteindre sa consigne de puissance électrique transmise par le contrôleur général 11) n'aura que peu d'effet voire pas d'effet sur leur fonctionnement.

Si la modification de l'alimentation électrique de toutes les charges dissipatives de priorité 1 et de toutes les charges dissipatives de priorité 2 ne suffit pas pour soutenir le système pile 14, alors le contrôleur général 11 ordonne une modification de l'alimentation électrique d'au moins une des charges génératrices.

En particulier, le contrôleur général 11 ordonne un abaissement de l'alimentation électrique d'au moins une des charges régénératives et/ou ordonne à au moins une des charges régénératives d'inverser son mode de fonctionnement pour devenir temporairement une source d'alimentation additionnelle de la barre omnibus 12. Par exemple la charge tournante peut temporairement former un frein et convertir ainsi l'énergie de freinage en énergie électrique transmise à la barre omnibus 12. A cet effet, le contrôleur général 11 transmet une consigne correspondante au contrôleur 28 pour que celui-ci abaisse la puissance électrique transmise à la charge 26 ou bien commande l'un des contacteurs pour couper temporairement l'alimentation de la charge 26 ou bien transmet une consigne correspondante au contrôleur 28 pour que celui-ci inverse le sens de fonctionnement de la charge 26 qui devient alors une source.

Par ailleurs lorsque la différence entre la consigne de puissance électrique à générer par la pile à combustible 15 et la puissance électrique déjà générée par la pile à combustible 15 redescend en-dessous d'un seuil prédéterminé, le contrôleur pile 17 bascule de nouveau le compresseur 16 dans son mode nominal. Il en avertit alors le contrôleur général 11.

A partir du moment où le compresseur 16 revient dans son mode nominal, le contrôleur général 11 commande les différents contrôleurs du système électrique 10 afin de revenir à la configuration initiale en terme d'alimentation électrique des charges. A cet effet, le contrôleur général 11 ordonne tout d'abord un retour progressif à l'alimentation électrique initiale des charges régénératrices, puis des charges dissipatives de niveau 2 puis des charges dissipatives de niveau 1.

Ainsi, la tension de la barre omnibus 12 est régulée dans le système électrique 10 en pilotant la consommation des charges connectées à la barre omnibus 12 lorsque les sources pouvant assister le système pile 15 ne sont pas disponibles ou sont saturées ou sont limitées, et par exemple limitées dans certaines gammes de fréquence, ou que l'on ne souhaite pas les activer.

Dès lors, le système électrique 10 et notamment sa barre omnibus 12 peuvent travailler dans des conditions optimales (notamment en terme de stabilité) tout en tentant au maximum de préserver l'alimentation électrique des charges les plus critiques car plus sujettes aux modifications de leur alimentation électrique. En outre, la modification de l'alimentation électrique d'une ou plusieurs charges n'est que temporaire.

Ce qui vient d'être évoqué ci-dessus est également applicable dans le cas où la puissance électrique consommée diminue vis-à-vis de la puissance électrique générée par les sources.

Ainsi, au cours d'une première étape, le contrôleur général 11 estime la puissance électrique devant être délivrée aux charges par la barre omnibus 12 et estime la puissance électrique fournie par les différentes sources à la barre omnibus 12. En cas de diminution de la puissance électrique consommée par les charges, le contrôleur général 11 transmet de préférence au système pile 14 une consigne d'une puissance électrique à atteindre pour compenser cette demande des charges.

Au cours d'une deuxième étape, le contrôleur pile 17 connaissant la puissance électrique déjà générée par la pile à combustible 15 et recevant la consigne de puissance électrique de la part du contrôleur général 11, estime si la pile à combustible 15 seule peut atteindre la consigne dans un intervalle de temps qui est égal ou inférieur à un intervalle de temps prédéterminé.

Au cours d'une troisième étape, si le contrôleur pile 17 estime que la pile à combustible 15 ne peut atteindre seule la consigne de puissance dans l'intervalle de temps prédéterminé, il en informe le contrôleur général 11. Celui-ci :
- estime si une ou plusieurs des autres sources alimentant la barre omnibus 12 peut soutenir le système pile 14 à diminuer la puissance électrique alimentant la barre omnibus 12, et/ou
- ordonne une modification de l'alimentation électrique par la barre omnibus 12 d'au moins l'une des charges.

Ainsi, pour soutenir le système pile 14, le contrôleur général 11 peut ordonner une modification de l'alimentation électrique par la barre omnibus 12 d'au moins l'une des charges et en particulier ordonne d'abord une modification de l'alimentation électrique d'au moins une des charges dissipatives.

De préférence, le contrôleur général 11 ordonne d'abord une modification de l'alimentation électrique d'au moins une des charges dissipatives de priorité 1.

En particulier, le contrôleur général 11 ordonne une augmentation de l'alimentation électrique d'au moins une des charges dissipatives de priorité 1. Ici, le contrôleur général 11 ordonne une augmentation de l'alimentation électrique de la barre additionnelle 29 tout en veillant bien entendu à ce que la tension aux bornes de la barre additionnelle 29 demeure elle-même dans sa plage de fonctionnement prédéfinie. A cet effet, le contrôleur général 11 transmet une consigne correspondante au contrôleur 31 pour que celui-ci augmente la puissance électrique transmise à la barre additionnelle 29.

Ainsi on régule la tension aux bornes de la barre omnibus 12 sans délester de manière totale des charges.

Si la modification de l'alimentation électrique de toutes les charges dissipatives de priorité 1 ne suffit pas pour soutenir le système pile 14, le contrôleur général 11 ordonne une modification de l'alimentation électrique d'au moins une des charges dissipatives de priorité 2.

En particulier, le contrôleur général 11 ordonne une augmentation de l'alimentation électrique d'au moins une des charges dissipatives de priorité 2.

A cet effet, le contrôleur général 11 transmet une consigne correspondante au contrôleur 37 pour que celui-ci augmente la puissance électrique transmise à la charge 35.

On rappelle que les charges dissipatives de priorité 2 ont un temps de réponse (à une modification de leur alimentation électrique) relativement lent vis-à-vis d'un temps de réponse du système électrique pour faire face à la demande de diminution de puissance électrique à fournir à la barre omnibus 12. En effet, les charges dissipatives de priorité 2 sont régulées en pression, en température, en débit ... et leurs constantes de temps en régulation est ainsi plus lente que la constante de temps en régulation en tension de la barre omnibus.

En conséquence, une augmentation temporaire de leur alimentation (le temps pour le système électrique 10 de répondre à la demande d'abaissement de puissance électrique à fournir à la barre omnibus 12 et par exemple le temps pour le système pile 14 d'atteindre sa consigne de puissance électrique transmise par le contrôleur général 11) n'aura que peu d'effet voire pas d'effet sur leur fonctionnement.

Si la modification de l'alimentation électrique de toutes les charges dissipatives de priorité 1 et de toutes les charges dissipatives de priorité 2 ne suffit pas pour soutenir le système pile 14, alors le contrôleur général 11 ordonne une modification de l'alimentation électrique d'au moins une des charges régénératives.

En particulier, le contrôleur général 11 ordonne une augmentation de l'alimentation électrique d'au moins une des charges régénératives. A cet effet, le contrôleur général 11 transmet une consigne correspondante au contrôleur 28 pour que celui-ci augmente la puissance électrique transmise à la charge 26.

Par ailleurs lorsque la différence entre la consigne de puissance électrique à générer par la pile à combustible 15 et la puissance électrique déjà générée par la pile à combustible 15 redescend en-dessous d'un seuil prédéterminé, le contrôleur général 11 commande les différents contrôleur du système électrique 10 afin de revenir à la configuration initiale en terme d'alimentation électrique des charges. A cet effet, le contrôleur général 11 ordonne tout d'abord un retour à l'alimentation électrique initiale des charges régénératrices, puis des charges dissipatives de niveau 2 puis des charges dissipatives de niveau 1.

En référence à la figure 3b, en complément de ce qui a été indiqué, le système électrique 10 et en particulier son système pile 14 est apte à fonctionner selon la première configuration indiquée précédemment et également selon une deuxième configuration décrite ci-après.

Dans cette deuxième configuration, le système électrique 10 est apte à anticiper au moins un appel futur des charges entrainant une augmentation future de la puissance électrique qu'ils consomment.

Si un tel appel est anticipé, alors le contrôleur pile 17 commande le compresseur 16 pour augmenter son point de régime du point de régime actuel P à un point de régime supérieur P' et ainsi augmenter le débit d'air comprimé que le compresseur 16 produit. On comprend donc que le point de régime P' du compresseur 16 dépasse ainsi le point de régime P qui est en réalité réellement nécessaire à l'appel actuel des charges. On dit alors que le compresseur 16 est surchargé (de manière temporaire comme on le verra par la suite).

Par ailleurs, une vanne 38 de dérivation du système pile 14 (plus connue sous le terme de « vanne bypass ») est ouverte pour contenir l'afflux supplémentaire d'air comprimé par le compresseur 16 du fait du fait du surchargement du compresseur 16.

Ceci permet de maintenir identique le point de fonctionnement de la pile à combustible 15 malgré le surchargement du compresseur 16. L'excédent d'air comprimé est évacué par la vanne 38 et n'est pas transmise à l'empilement (plus connu sous le terme anglais de « stack ») de la pile à combustible 15 de sorte que la puissance électrique qu'elle transmet au système électrique demeure inchangée.

Le pilotage du compresseur 15 et celui de la vanne 38 sont de préférence coordonnés et assurés par le contrôleur pile 17.

Lors de l'appel effectif, la vanne 38 est fermée et l'air comprimé additionnel préalablement stocké est ainsi transmis à la pile à combustible 15. Le contrôleur pile 17 pilote en fonction le débit de l'hydrogène transmis à la pile à combustible 15 afin que celle-ci puisse atteindre un nouveau point de fonctionnement stabilisé.

De cette manière, le système pile 14 atteint plus rapidement la consigne d'augmentation de puissance électrique à fournir à la barre omnibus 12. En particulier, le système 14 augmente instantanément la puissance électrique qu'elle fournit à la barre omnibus 12.

Avantageusement, lors de l'appel effectif, le compresseur 16 est déjà à un point de régime supérieur et l'énergie électrique supplémentaire nécessaire à son augmentation de régime a pu être lissée dans le temps.

Le compresseur 16 peut optionnellement alors être basculé dans son mode dopé pour mettre en place la première configuration décrite précédemment ou bien être conservé dans son mode nominal.

La deuxième configuration peut ainsi être pilotée par le contrôleur général 11 et/ou le contrôleur pile 17 (par exemple cette deuxième configuration peut être seule gérée par le contrôleur pile 17 si celui-ci à l'information de l'appel de charge anticipé comme illustré à la figure 3a).

Bien entendu, l'invention n'est pas limitée au mode de réalisation décrit mais englobe toute variante entrant dans le champ de l'invention telle que définie par les revendications.

L'aéronef pourra être un drone, un avion, un hélicoptère ...

Bien qu'ici la barre omnibus soit alimentée par au moins trois sources ou moins quatre sources, la barre omnibus pourra être alimentée par un nombre inférieur ou supérieur de sources. Par exemple, la barre omnibus pourra ne pas être alimentée par une machine électrique en particulier en lien avec une turbomachine. En cas de présence d'une turbomachine (dans l'aéronef et/ou en tant que source de la barre omnibus), la turbomachine pourra être un turboréacteur à double-flux, un turboréacteur à simple flux, un turboréacteur à plus de deux corps, un turbopropulseur hybride, un turboréacteur hybride ... Par exemple, la barre omnibus pourra ne pas être alimentée par une source d'alimentation externe. Par exemple, la barre omnibus pourra être alimentée par au moins deux machines électriques ou plus, à la place d'une comme cela a été indiqué.

Le système électrique pourra être différent de ce qui a été indiqué et comprendre par exemple au moins une barre omnibus en courant alternatif. Le système électrique pourra ainsi comporter au moins un canal en courant alternatif. Le système électrique contrôlera ainsi la tension de la barre omnibus en amplitude lorsque la barre omnibus est en courant continu et le système électrique contrôlera ainsi la tension de la barre omnibus en amplitude et en fréquence lorsque la barre omnibus est en courant alternatif.

Le système électrique pourra d'abord commander une ou plusieurs autres sources pour satisfaire une augmentation d'une puissance électrique consommée par les charges avant de se tourner vers le système pile.

Le système de gestion pourra comporter un nombre supérieur de barres omnibus que ce qui a été indiqué, chaque barre étant alors contrôlée par le contrôleur général comme ce qui a été indiqué ci-dessus avec un contrôle de l'alimentation des charges si les sources ne peuvent faire face à une augmentation de la puissance électrique consommée par les charges.

Les charges pourront être de tout type et être par exemple des charges ayant des fonctions propulsives (alimentation d'un ou de plusieurs moteurs électriques, aide au démarrage d'au moins une turbomachine, ...) ou des fonctions non propulsives (alimentation d'un dispositif interne à l'aéronef comme par exemple un ensemble d'écrans de divertissement implantés sur les sièges des passagers, etc.). Le nombre de charges et/ou le nombre de catégories de charges pourra être différent de ce qui a été indiqué.

Si plusieurs charges régénératives sont connectées à la barre, l'alimentation électrique d'au moins deux charges régénératives différentes pourra être gérée par un contrôleur commun entre les deux charges régénératives et/ou lesdites charges pourront elles-mêmes être classées en au moins deux catégories de priorités différentes, les charges appartenant à la première catégorie étant celles dont l'alimentation électrique est la première modifiée.

Bien qu'ici, le système électrique et en particulier son système pile fonctionne selon une deuxième configuration uniquement en cas d'anticipation d'une augmentation de la puissance électrique consommée, le système électrique et son système pile pourront fonctionner selon la deuxième configuration même sans une telle anticipation - par exemple pour provisionner une capacité supplémentaire de puissance électrique pouvant être délivrée par le système pile.

Au moins un des contacteurs décrits pourra être de type tout ou rien ou bien pourra être un contacteur pilotable par exemple par un contrôleur de puissance à semi-conducteurs (plus connu sous l'acronyme anglais de SSPC) .

## Revendications

1. Procédé de régulation en tension d'au moins une barre omnibus (12) d'un système électrique, la barre étant alimentée par au moins une source, la source étant un système pile (14) comprenant au moins une pile à combustible (15) et un compresseur (16) associé à la pile à combustible, la barre alimentant par ailleurs des charges dont au moins une charge dissipative, le procédé comprenant les étapes de :
- Au vu d'une grandeur caractéristique d'une intensité électrique générée par le système pile et d'une consigne d'une grandeur caractéristique d'une intensité électrique à générer par le système pile entrainant une augmentation de puissance à délivrer par le système pile, estimer si la pile à combustible peut atteindre la consigne dans un intervalle de temps qui est égal ou inférieur à un intervalle de temps prédéterminé,
- Si la pile à combustible ne peut atteindre la consigne dans un intervalle de temps qui est égal ou inférieur à un intervalle de temps prédéterminé, basculer le compresseur d'un mode nominal à un mode dopé s'il n'était pas déjà dans son mode dopé,
**caractérisé en ce que** le procédé comprend les étapes de:
- Si le compresseur est basculé dans le mode dopé, commander une modification de l'alimentation électrique d'au moins l'une des charges, en commençant d'abord par ladite au moins une charge dissipative.

2. Procédé selon la revendication 1, dans lequel les charges alimentées par la barre comportent au moins une charge régénérative, et dans lequel on commande d'abord une modification de l'alimentation électrique de ladite au moins une charge dissipative avant de commander une modification de l'alimentation électrique de ladite au moins une charge régénérative.

3. Procédé selon l'une des revendications 1 ou 2, dans lequel les charges dissipatives sont classées en au moins deux catégories de priorités différentes, les charges dissipatives appartenant à la première catégorie étant celles dont l'alimentation électrique est la première modifiée.

4. Procédé selon la revendication 3, comprenant l'étape de regrouper les charges dissipatives appartenant à la première catégorie en au moins un groupe qui est connecté à une barre omnibus secondaire (29), elle-même connectée à la barre omnibus (12) par l'intermédiaire d'un convertisseur électronique de puissance (30).

5. Procédé selon la revendication 4, comprenant l'étape d'abaisser une tension aux bornes de la barre omnibus secondaire (29) pour modifier l'alimentation électrique fournie au groupe par la barre omnibus (12).

6. Procédé selon l'une des revendications 1 à 5, comprenant également les étapes de :
- Au vu d'une grandeur caractéristique d'une intensité électrique générée par le système pile (14) et d'une consigne d'une grandeur caractéristique d'une intensité électrique à générer par le système pile entrainant une diminution de puissance à délivrer par le système pile, estimer si la pile à combustible (15) peut atteindre la consigne dans un intervalle de temps qui est égal ou inférieur à un intervalle de temps prédéterminé,
- Si la pile à combustible ne peut atteindre la consigne dans un intervalle de temps qui est égal ou inférieur à un intervalle de temps prédéterminé, commander une modification de l'alimentation électrique d'au moins l'une des charges, en commençant d'abord par la ou les charges dissipatives.

7. Procédé selon l'une des revendications précédentes, dans lequel si l'intervalle de temps est supérieur à l'intervalle de temps prédéterminé, on s'appuie sur au moins une autre source pour alimenter la barre omnibus (12).

8. Procédé selon l'une des revendications précédentes, comprenant l'étape d'associer à la barre omnibus au moins une source additionnelle, la source additionnelle étant un organe de stockage (20) d'énergie.

9. Système électrique (10) conformé pour mettre en œuvre le procédé selon l'une des revendications précédentes, le système électrique comprenant ainsi une barre omnibus (12) et au moins une source alimentant la barre omnibus, la source étant un système pile (14) comprenant au moins une pile à combustible (15) et un compresseur (16) associé à la pile à combustible, la barre alimentant par ailleurs des charges dont au moins une charge dissipative.

10. Aéronef (A) comprenant au moins un système électrique (10) selon la revendication 9.

## Patentansprüche

1. Verfahren zur Spannungsregelung mindestens einer Stromschiene (12) eines elektrischen Systems, wobei die Stromschiene von mindestens einer Quelle gespeist wird, wobei es sich bei der Quelle um ein Batteriesystem (14) handelt, das mindestens eine Brennstoffzelle (15) und einen der Brennstoffzelle zugeordneten Kompressor (16) umfasst, wobei die Stromschiene außerdem Lasten speist, darunter mindestens eine dissipative Last, wobei das Verfahren die folgenden Schritte umfasst:
- In Anbetracht einer Kenngröße einer vom Batteriesystem erzeugten elektrischen Stromstärke und eines Sollwerts einer Kenngröße einer vom Batteriesystem zu erzeugenden elektrischen Stromstärke, der eine Erhöhung der vom Batteriesystem abzugebenden Leistung bewirkt, Einschätzen, ob die Brennstoffzelle den Sollwert innerhalb eines Zeitintervalls erreichen kann, das gleich oder kleiner als ein vorbestimmtes Zeitintervall ist,
- Wenn die Brennstoffzelle den Sollwert nicht innerhalb eines Zeitintervalls erreichen kann, das gleich oder kleiner als ein vorbestimmtes Zeitintervall ist, Umschalten des Kompressors von einem Nennmodus in einen Boost-Modus, sofern er sich nicht bereits in seinem Boost-Modus befand,
**dadurch gekennzeichnet, dass** das Verfahren folgende
Schritte umfasst:
- Wenn der Kompressor in den Boost-Modus geschaltet wird, Veranlassen einer Änderung der Stromversorgung von mindestens einer der Lasten, wobei zunächst mit der mindestens einen dissipativen Last begonnen wird.

2. Verfahren nach Anspruch 1, bei dem die über die Stromschiene gespeisten Lasten mindestens eine regenerative Last umfassen und bei dem zunächst eine Änderung der Stromversorgung der mindestens einen dissipativen Last veranlasst wird, bevor eine Änderung der Stromversorgung der mindestens einen regenerativen Last veranlasst wird.

3. Verfahren nach einem der Ansprüche 1 oder 2, bei dem die dissipativen Lasten in mindestens zwei Kategorien mit unterschiedlichen Prioritäten eingeteilt werden, wobei die dissipativen Lasten der ersten Kategorie diejenigen sind, deren Stromversorgung als erstes geändert wird.

4. Verfahren nach Anspruch 3, umfassend den Schritt des Zusammenfassens der zur ersten Kategorie gehörenden dissipativen Lasten zu mindestens einer Gruppe, die an eine sekundäre Stromschiene (29) angeschlossen ist, die ihrerseits über einen elektronischen Leistungswandler (30) an die Stromschiene (12) angeschlossen ist.

5. Verfahren nach Anspruch 4, umfassend den Schritt des Verringerns einer Spannung an den Anschlüssen der sekundären Stromschiene (29), um die Stromversorgung, die der Gruppe über die Stromschiene (12) zugeführt wird, zu ändern.

6. Verfahren nach einem der Ansprüche 1 bis 5, das außerdem die folgenden Schritte umfasst:
- In Anbetracht einer Kenngröße einer vom Batteriesystem erzeugten elektrischen Stromstärke und eines Sollwerts einer Kenngröße einer vom Batteriesystem (14) zu erzeugenden elektrischen Stromstärke, der eine Verringerung der vom Batteriesystem abzugebenden Leistung bewirkt, Einschätzen, ob die Brennstoffzelle (15) den Sollwert innerhalb eines Zeitintervalls erreichen kann, der gleich oder kleiner als ein vorbestimmtes Zeitintervall ist,
- Wenn die Brennstoffzelle den Sollwert nicht innerhalb eines Zeitintervalls erreichen kann, das gleich oder kleiner als ein vorbestimmtes Zeitintervall ist, Veranlassen einer Änderung der Stromversorgung mindestens einer der Lasten, wobei zunächst mit der bzw. den dissipativen Lasten begonnen wird.

7. Verfahren nach einem der vorstehenden Ansprüche, bei dem, falls das Zeitintervall größer ist als das vorbestimmte Zeitintervall, zur Versorgung der Stromschiene (12) auf mindestens eine weitere Quelle zurückgegriffen wird.

8. Verfahren nach einem der vorstehenden Ansprüche, umfassend den Schritt, mindestens eine zusätzliche Quelle mit der Stromschiene zu verbinden, wobei die zusätzliche Quelle ein Energiespeicherelement (20) ist.

9. Elektrisches System (10), das zur Umsetzung des Verfahrens nach einem der vorstehenden Ansprüche ausgelegt ist, wobei das elektrische System eine Stromschiene (12) und mindestens eine die Stromschiene speisende Quelle umfasst, wobei es sich bei der Quelle um ein Batteriesystem (14) handelt, das mindestens eine Brennstoffzelle (15) und einen der Brennstoffzelle zugeordneten Kompressor (16) umfasst, wobei die Stromschiene außerdem Lasten speist, darunter mindestens eine dissipative Last.

10. Luftfahrzeug (A) mit mindestens einem elektrischen System (10) nach Anspruch 9.

## Claims

1. A method for voltage regulation of at least one bus bar (12) of an electrical system, the bar being powered by at least one source, the source being a cell system (14) comprising at least one fuel cell (15) and a compressor (16) associated with the fuel cell, the bar further powering loads including at least one dissipative load, the method comprising the steps of:
- in view of a magnitude characteristic of an electric current generated by the cell system and a setpoint for a magnitude characteristic of an electric current to be generated by the cell system causing an increase in power to be delivered by the cell system, estimating whether the fuel cell can reach the setpoint within a time interval that is equal to or less than a predetermined time interval,
- if the fuel cell cannot reach the setpoint within a time interval that is equal to or less than a predetermined time interval, switching the compressor from a nominal mode to a boosted mode if it was not already in its boosted mode,
**characterized in that** the method comprises the steps of:
- if the compressor is switched to the boosted mode, commanding a modification of the power supply of at least one of the loads, starting first with said at least one dissipative load.

2. The method according to claim 1, wherein the loads powered by the bar include at least one regenerative load, and wherein a modification of the power supply of said at least one dissipative load is first commanded prior commanding a modification of the power supply of said at least one regenerative load.

3. The method according to any one of claims 1 or 2, wherein the dissipative loads are classified into at least two different priority categories, the dissipative loads belonging to the first category being those the power supply of which is modified first.

4. The method of claim 3, comprising the step of grouping the dissipative loads belonging to the first category into at least one group that is connected to a secondary bus bar (29), itself connected to the bus bar (12) via an electronic power converter (30).

5. The method according to claim 4, comprising the step of lowering a voltage across the secondary bus bar (29) to modify the power supply delivered to the group by the bus bar (12).

6. The method according to any one of claims 1 to 5, further comprising the steps of:
- in view of a magnitude characteristic of an electric current generated by the cell system (14) and a setpoint for a magnitude characteristic of an electric current to be generated by the cell system causing a decrease in power to be delivered by the cell system, estimating whether the fuel cell (15) can reach the setpoint within a time interval that is equal to or less than a predetermined time interval,
- if the fuel cell cannot reach the setpoint within a time interval that is equal to or less than a predetermined time interval, commanding a modification of the power supply of at least one of the loads, starting first with the dissipative load(s).

7. The method according to any one of the preceding claims, wherein if the time interval is greater than the predetermined time interval, at least one other source is used to power the bus bar (12).

8. The method according to any one of the preceding claims, comprising the step of associating with the bus bar at least one additional source, the additional source being an energy storage member (20).

9. An electrical system (10) configured to implement the method of any one of the preceding claims, the electrical system thus comprising a bus bar (12) and at least one source powering the bus bar, the source being a cell system (14) comprising at least one fuel cell (15) and a compressor (16) associated with the fuel cell, the bar further powering loads including at least one dissipative load.

10. An aircraft (A) including at least one electrical system (10) according to claim 9.
